# EUROPÄISCHE PATENTSCHRIFT

(11) **EP 0 759 491 B1**
(45) Veröffentlichungstag und Bekanntmachung des Hinweises auf die Patenterteilung: **23.01.2002**
(21) Anmeldenummer: 96113273.5
(22) Anmeldetag: 19.08.1996
(51) Int. Cl.: B23P 19/04, E04F 21/00, E06B 7/16

(54) **Vorrichtung zum Einziehen eines Dichtungstreifens in eine Aufnahme an einem Werkstück, insbesondere in die Nut eines Fenster- oder Türrahmens**
Device for inserting a sealing strip in a receiving section of a workpiece, in particular in a groove of a window or door frame
Dispositif pour l'introduction d'un joint d'étanchéité dans un emplacement récepteur d'une pièce, en particulier dans une rainure d'un châssis de porte ou fenêtre

(30) Priorität: 19.08.1995 DE 19530521
(43) Veröffentlichungstag der Anmeldung: 26.02.1997
(73) Patentinhaber: ROTOX GmbH B. EISENBACH, 56858 Grenderich (DE)
(72) Erfinder: Blum, Werner, D-55594 Sommerloch (DE)
(74) Vertreter: Müller, Eckhard, Dr.

(56) Entgegenhaltungen:
- DE-A- 2 915 282
- DE-A- 3 243 214
- DE-A- 3 405 512

## Beschreibung

Die Erfindung betrifft eine Vorrichtung zum Einziehen eines Dichtungsstreifens oder dergleichen länglich elastischen Elementes in eine Aufnahme an einem Werkstück, insbesondere in eine Nut eines Profilschenkels eines Fenster- oder Türrahmens, mit Mitteln zur Erzeugung einer Relativbewegung zwischen Werkstück und einer Einrichtung zum Zuführen und Einziehen des Dichtungsstreifens in die Nut.

Eine derartige Vorrichtung ist bspw. aus der DE 29 15 282 A1 bekannt. Diese Einrichtung zum Einsetzen von Dichtungselementen in die Nuten von Falzen, insbesondere Fenster- oder Türelementen, weist eine mit Anschlägen versehene Werkstück-Transporteinrichtung, eine Einrichtung zum automatischen Zuführen, Positionieren und Eindrücken des Dichtungselements in die Nut des Werkstückes sowie eine relativ zum Werkstück höhen- und seitenverstellbare Einrichtung zum Einwalzen des Dichtungselements in die Nut auf. Desweiteren ist eine Abschneideeinrichtung zum Abtrennen der erforderlichen Länge des Dichtungselementes vorgesehen. Insbesondere weist die Einwalzeinrichtung mehrere Druckrollen auf, mit denen das Dichtungselement im Durchlaufbetrieb in die Nut des Werkstücks eingesetzt wird. Diese Druckrollen werden mit einer Umfangsgeschwindigkeit angetrieben, die der Bewegungsgeschwindigkeit des durchlaufenden Werkstücks entspricht.

Desweiteren offenbart die DE 32 43 214 A1 eine Vorrichtung zum automatischen Einziehen eines Dichtungsstreifens in eine Nut eines Fensterrahmens, wobei eine Vorratsrolle mit darauf aufgewickeltem Dichtungsstreifens vorgesehen ist, von der der Dichtungsstreifen über eine Transporteinrichtung der Nut zugeführt wird. Es ist ferner eine Schneideeinrichtung vorhanden, die die Dichtungsstreifen automatisch in Stücke mit der gewünschten Länge schneidet. Eine Eindrückeinrichtung drückt den Dichtungsstreifen in die Nut, während mit einem Förderantrieb der Fensterrahmen relativ zu der Eindrückeinrichtung transportiert wird. Dabei besteht der einzige, an einer Trägerplatte angeordnete Antrieb für die Vorschubrollen für das Dichtungselement und für die Walze zum Transport des Werkstückes aus einem von einem Motor angetriebenen kombinierten Zugmittel und Zahnradgetriebe.

Diese bekannten Vorrichtungen weisen jedoch den Nachteil auf, daß ein einwandfreies Einziehen des Dichtungsstreifens über die gesamte Länge der Nut nicht möglich ist.

Aus der DE 34 05 512 A1 ist eine Vorrichtung zum formschlüssigen Eindrücken von elastomeren Dichtungsprofilen in Rahmenprofile bekannt, bei der eine Andruckrolle vorgesehen ist, deren Querschnitt dem Querschnitt des nach außen weisenden Teils des Dichtungsprofils entspricht. Die Andruckrolle wird mit einer Umfangsgeschwindigkeit angetrieben, die größer ist als die Translationsgeschwindigkeit, mit der sich die Achse der Andruckrolle relativ parallel zur Längsachse des Rahmenprofils bewegt. Der Drehsinn der Andruckrolle ist so gewählt, daß die bereits formschlüssig im Rahmen befindliche Teillänge des Dichtungsprofils auf Stauchung beansprucht wird. Diese Vorrichtung bildet den Oberbegriff des Anspruchs 1.

Aufgabe der Erfindung ist es daher, die eine Vorrichtung der eingangs genannten Art zu verbessern.

Diese Aufgabe wird erfindungsgemäß gelöst von einer Vorrichtung mit den Merkmalen des Anspruchs 1. Eine vorteilhafte Weiterbildung der Erfindung ist Gegenstand des Anspruchs 2.

Die erfindungsgemäße Schlaufenbildung vor der Stauchung nimmt also jede Spannung aus dem zuzuführenden Dichtungselement und erlaubt daher ein absolut zuverlässiges Füllen der Nut mit dem gestauchten Dichtungselement. Unregelmäßigkeiten, "Hänger" o.ä. Zuführprobleme treten erfindungsgemäß nicht mehr auf. Durch diese Maßnahmen wird erreicht, daß der Dichtungsstreifen während des Einziehens in die Nut in Längsrichtung immer um ein definiertes Maß gestaucht bzw. komprimiert wird. Hierdurch wird ein Herausspringen des Dichtungsstreifens, insbesondere in den Eckbereichen des Rahmens, und ebenso einem durch Alterung bedingten Schrumpfen des elastischen Dichtungsstreifens entgegengewirkt. Aufgrund dieser Stauchung des Dichtungsstreifens während des Einziehens wird die Nut über die gesamte Längserstreckung dauerhaft ausgefüllt. Somit ist eine einwandfreie Abdichtung gewährleistet.

Nach einer Ausgestaltung weisen die Mittel zur Erzeugung der Relativbewegung eine Fördereinrichtung zum Fördern des Werkstückes gegenüber der, vorzugsweise stationär angeordneten Einzieheinrichtung auf. Selbstverständlich ist es aber auch denkbar, daß das Werkstück ortsfest in der Gesamtvorrichtung gehalten ist, während die Einzieheinrichtung verfahrbar ausgebildet ist.

Von Vorteil weist die Fördereinrichtung wenigstens eine angetriebene Transportrolle o. dgl. Transportelement zum Verfahren des Werkstücks und die zweite Einrichtung wenigstens eine angetriebene Eindrückrolle, -walze o. dgl. Förderelement zum Fördern, Zuführen und Einziehen des Dichtungsstreifens auf, wobei die Drehzahl von Transport- und Förderrolle synchronisiert ist und die Umfangsgeschwindigkeit der Eindrückrolle größer als die Umfangsgeschwindigkeit der Transportrolle ist. Durch diese Maßnahme wird gewährleistet, daß bezogen auf den Verfahrweg des Werkstückes pro Zeiteinheit der Nut eine um ein gewisses Maß vergrößerte Länge des Dichtungsstreifens zugeführt und in die Nut eingezogen wird.

Besonders vorteilhaft ist es dabei, daß die Förderrichtung und die Einzieheinrichtung einen gemeinsamen Antrieb aufweisen.

Eine konstruktiv einfache Ausgestaltung besteht darin, daß der Radius der Eindrückrolle größer als der Radius der Transportrolle ist. In diesem Fall kann zum Antrieb der Rollen bzw. Walzen für das Werkstück sowie für den Dichtungsstreifen insbesondere ein einzähliger Antrieb eingesetzt werden mit gleicher Drehzahl für Transport- und Eindrückrolle, wobei die Stauchung des Dichtungsstreifens während des Einziehens aufgrund der unterschiedlichen Radien der jeweiligen Rollen bzw. Walzen erhalten wird.

Um mit ein und derselben Vorrichtung unterschiedliche Dichtungsstreifen verarbeiten zu können, kann es sich empfehlen, die Transportrolle und die Eindrückrolle im Durchmesser verstellbar auszubilden.

Möglich ist auch, daß die Einzieheinrichtung für eine zug- bzw. dehnungsfreie Förderung und Einziehbewegung des Dichtungsstreifens ausgebildet ist. Hierdurch ist ein gleichbleibender Staucheffekt auf den Dichtungsstreifen beim Einziehen in die Nut gewährleistet. Eine Dehnung des Dichtungsstreifens, insbesondere im Eckbereich des Rahmens, ist damit verhindert.

Die zug- bzw. dehnungsfreie Zuführung des Dichtungsstreifens läßt sich erfindungsgemäß dadurch realisieren, daß in Förderrichtung vor der Eindrückrolle eine Förderrolle für den Dichtungsstreifen vorgesehen ist, welcher Mittel zugeordnet sind, die eine Schlaufe des Dichtungsstreifens vor der Eindrückrolle aufrechterhalten. Diese Mittel können in vorteilhafter Weise bspw. so ausgebildet sein, daß bevor der Dichtungsstreifen unter Zug gerät, dieser einen Kontakt auslöst, wodurch eine Andrückrolle den Dichtungsstreifen gegen die Förderrolle preßt, so daß der Dichtungsstreifen, bspw. von einer Haspel, abgezogen und die Schlaufe zwischen Förder- und Eindrückrolle erneut gebildet bzw. aufrechterhalten wird. Sobald die Schlaufe in ausreichendem Maße vorhanden ist, wird die Andrückrolle wieder von der Dichtung abgehoben.

Vorteilhafterweise ist für die Förder- und die Eindrückrolle ein gemeinsamer Antrieb vorgesehen, wobei die Förderrolle einen größeren Durchmesser als die Eindrückrolle aufweist, um so während der Zufuhrbewegung des Dichtungsstreifens bzw. während der Einziehbewegung die Schlaufe bilden bzw. aufrechterhalten zu können.

Nach einem Gedanken der Erfindung ist die Einzieheinrichtung, insbesondere deren Eindrückrolle verstellbar bzgl. der Auflage des Werkstückes ausgebildet, um so unterschiedliche Dichtungsstreifen einziehen zu können.

Nach einem eigenständigen Gedanken der Erfindung ist auch eine Schwenkeinrichtung für das Werkstück vorgesehen mit Haltemitteln für das Werkstück sowie Schwenkmitteln zum Verschwenken der Haltemittel, wobei vorzugsweise die Schwenkachse der Schwenkmittel die Achse der Eindrückrolle etwa im Bereich der Wirkfläche der Eindrückrolle in einem rechten Winkel schneidet. Hierdurch ist ein maschinelles, kontinuierliches Einbringen des Dichtungsstreifens in die Nut an allen vier Seiten des Rahmens, auch in seinen Eckbereichen ermöglicht, d.h. der Dichtungsstreifen kann umlaufend eingezogen werden.

Nach einer weiteren Ausgestaltung der Erfindung ist es vorgesehen, daß die Schwenkeinrichtung einen zum Eingreifen in den Fenster- oder Türrahmen ausgebildeten und zumindest zeitweise während der Förderbewegung des Werkstücks in Mitnahmebewegung mit der Fördereinrichtung bzw. dem Werkstück stehenden Mitnahmestift aufweist, welcher in einer Endstellung ein Signal für die Einleitung der Schwenkbewegung und/oder Stillsetzung der Förderbewegung des Werkstückes auslöst. Nach dem Auflegen des Rahmens greift der, bspw. an einem am Auflagetisch der Vorrichtung verfahrbaren Hubschlitten angeordnete Mitnahmestift in den Rahmen ein und wird beim Einziehen des Dichtungsstreifens von der Innenseite des jeweils nacheilenden, im rechten Winkel zu dem gerade in Bearbeitung befindlichen Bearbeitungsschenkel liegenden Profilschenkels mitgeschleppt, bis der Mitnahmestift in eine vorgegebene, ggf. einstellbare Endstellung gelangt. Dabei wird bspw. ein Schalter betätigt, welcher den Antrieb abschaltet und die Schwenkbewegung einleitet, wobei vermittels der Schwenkbewegung der Dichtungsstreifen im Bereich der Rahmenecke eingezogen wird. Nachdem die Drehbewegung beendet ist, wird der Antrieb für die Förderbewegung des Werkstückes und die Drehbewegung der Eindrückrolle wieder in Gang gesetzt, wobei der innerhalb des Rahmens befindliche Mitnahmestift nach einer gewissen Förderstrecke wieder in Mitnahmebewegung mit dem nunmehr nachlaufenden Rahmenschenkel gelangt, bis in Endstellung des Anschlages wiederum die Förderung des Rahmens stillgesetzt wird und die Schwenkbewegung einsetzt. Die Vorgänge wiederholen sich bis alle Profilschenkel umlaufend mit Dichtungsstreifen versehen sind.

Schließlich ist es nach einer Ausführungsform der Erfindung vorgesehen, daß die Fördereinrichtung Führungsrollen aufweist, welche das Werkstück während der Einziehbewegung des Dichtungsstreifens gegen einen Anschlag drücken, welche Führungsrollen ggf. in einer Richtung senkrecht zur Aufnahmeebene für das Werkstück beweglich und in Art eines Doppelkegelstumpfes ausgebildet sind, wobei der dem Werkstück zugewandte Kegelstumpf einen relativ großen Neigungswinkel seiner Mantelfläche aufweist. Hierdurch wird der Rahmenschenkel durch die vorzugsweise federnd gelagerten konischen Führungsrollen während der Bearbeitung an einen seitlichen Anschlag, bspw. gegen eine Röllchenbahn oder eine Anschlagschiene, gedrückt. Beim Einlegen des Rahmens senken sich die vorzugsweise federnd gelagerte Führungsrollen durch das Gewicht des Rahmens in der Auflage ab und werden wieder angehoben, wenn der Rahmenschenkel über den dem Anschlag zugewandten Kegelstumpf zu liegen kommt. Im Bereich der Wendestation bzw. der Schwenkeinrichtung sind die Führungsrollen vorzugsweise mittels eines Antriebes absenkbar, um ein Verschwenken des Rahmens zu ermöglichen.

Die erfindungsgemäße Vorrichtung ist selbstverständlich für das Einbringen eines Dichtungsstreifens o. dgl. elastischen Elements sowohl auf der Ober- und Unterseite bzw. Vorder- und Rückseite des Werkstückes einsetzbar.

Weitere Ziele, Vorteile und Anwendungsmöglichkeiten der vorliegenden Erfindung ergeben sich aus der nachfolgenden Beschreibung eines Ausführungsbeispieles anhand der Zeichnung.

Es zeigen:
- Figur 1: einen Querschnitt durch einen Profilstab eines Fenster- oder Türrahmens,
- Figur 2: eine Seitenansicht einer möglichen Ausführungsform einer erfindungsgemäßen Vorrichtung zum Einziehen eines Dichtungsstreifens in eine Nut eines Fenster- oder Türrahmens,
- Figur 3: eine Draufsicht auf die Vorrichtung nach Figur 2,
- Figur 4: eine perspektivische Teilansicht einer Wende- bzw. Schwenkeinrichtung gemäß Figur 2,
- Figur 5: eine perspektivische Ansicht einer Andrückrolle einer Fördereinrichtung gemäß Figur 2 und
- Figuren 6a bis 6d: die Darstellung aufeinanderfolgender Arbeitsschritte der Vorrichtung gemäß Figuren 2 und 3.

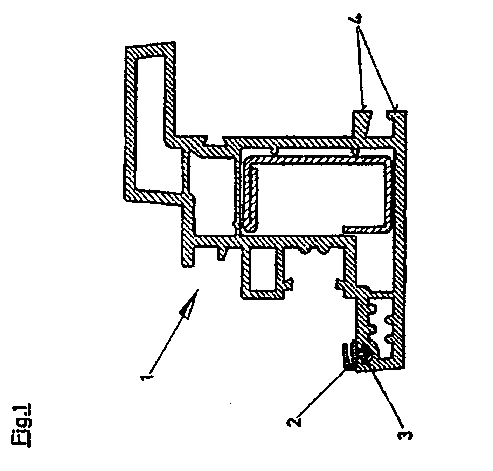

In Figur 1 ist ein Profilschenkel 1 im Querschnitt dargestellt, in dessen Nut 3 ein Dichtungsstreifen 2 einzuziehen ist. Für den Fall, daß der Profilschenkel 1 Bestandteil eines Fensterrahmens o. dgl. ist, ist der Dichtungsstreifen 2 an allen vier Schenkeln des Rahmens einzuziehen.

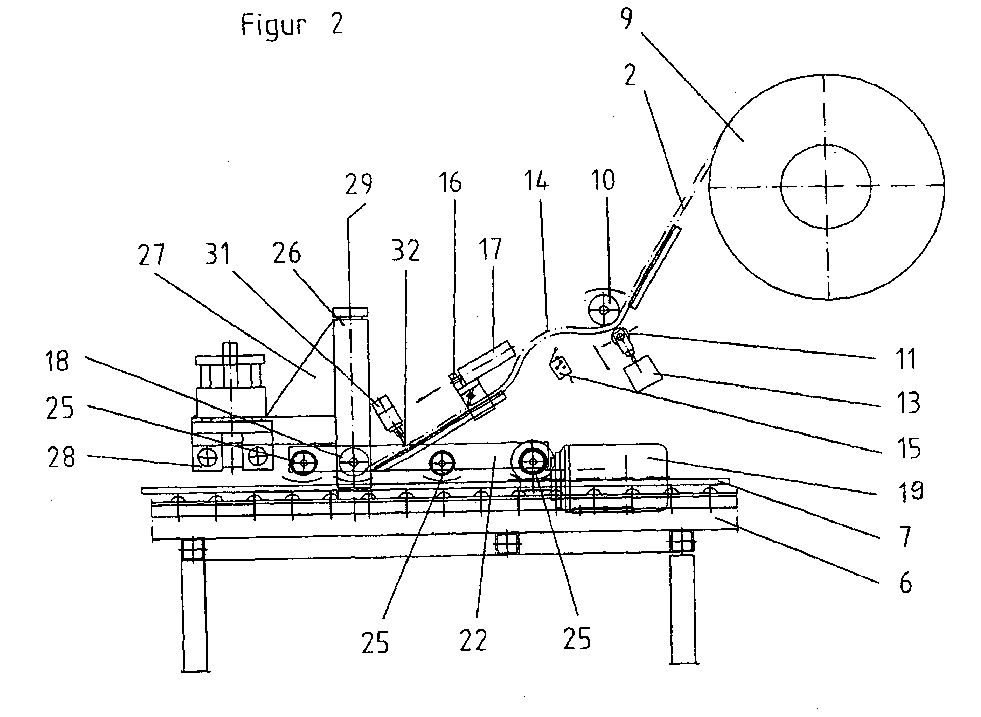

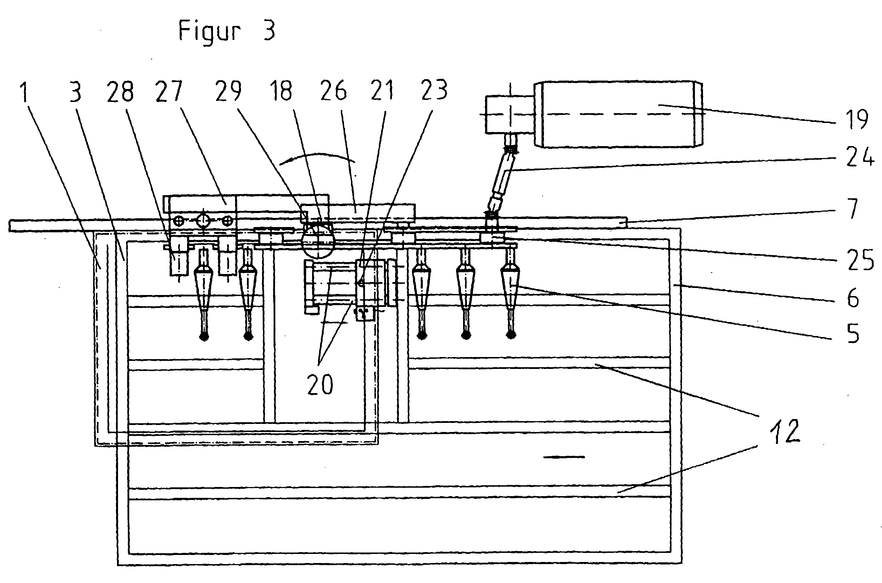

Hierzu greifen an einer Teilseitenfläche 4 des Profilschenkels 1 Rollen, insbesondere bei dem hier gewählten Ausführungsbeispiel waagrecht angeordnete Führungsrollen 5 an, die in einem Rollenbahntisch 6 der insbesondere in Figuren 2 und 3 dargestellten Vorrichtung waagrecht und schwenkbar gelagert sind. Diese Führungsrollen 5 pressen den aus den Schenkeln gebildeten Profilrahmen 1 auf der Rahmenaußenseite gegen eine seitliche Anschlagleiste 7, welche ggf. von einer Reihe von um senkrechte Drehachsen drehende Anschlagrollen gebildet sein kann, die an einer Längsseite oberhalb des Rollenbahntisches 6 angeordnet sind.

In der Draufsicht nach Figur 3 ist der Rollenbahntisch 6 dargestellt, der als Grundelemente mehrere gradlinige Rollbahnen 12 aufweist, an denen (nicht dargestellte) waagrecht geführte Rollen gelagert sind.

An einer Längsseite des Rollenbahntisches 6 sind in und oberhalb der Tischebene diverse maschinelle Einrichtungen, Schalter und Sensoren angeordnet, die in der Weise zusammenwirken, daß in die Nut 3 eines Profilrahmens 1 ein Dichtungsstreifen 2 eingezogen werden kann, wonach nach Verschwenken des Profilrahmens 1 um 90° der zweite Schenkel des Profilrahmens 1 mit dem Dichtungsstreifen 2 ausgefüllt wird. Das gleiche geschieht entsprechend mit dem dritten und vierten Schenkel des Profilrahmens 1, der also gesamt vier Vorläufe sowie vier Schwenkungen um jeweils 90° erfährt, bis der Dichtungsstreifen 2 umlaufend in die Nut 3 der Profilschenkel 1 eingezogen ist. Die aneinander stoßenden Enden des in der Nut 3 eingezogenen Dichtungsstreifens 2 werden danach miteinander verklebt.

Nachfolgend werden die an der Längsseite oberhalb des Rollenbahntisches 6 angeordneten Einrichtungen beschrieben.

Auf einer fest am Rollenbahntisch 6 drehbar gelagerten, friktionsgebremsten Abwickeltrommel 9 ist der Dichtungsstreifen 2 aufgewickelt, der durch das Zusammenspiel einer fest gelagerten Förderrolle 10 sowie einer dazu beweglich gelagerten, anpreßbaren Andrückrolle 11 in Richtung der Längsseite des Rollenbahntisches 6 gezogen wird. Die fest gelagerte Förderrolle 10 kann über ein (nicht dargestelltes) Getriebe von einem elektrischen Antriebsmotor angetrieben werden.

Bevorzugt ist für die Förderrolle 10, die Transportrollen 25 und die noch zu beschreibende Eindrückrolle 18 ein gemeinsamer Antrieb 19 vorgesehen, wobei dann für die weiter unten noch zu erläuternde Schlaufenbildung die Förderrolle 10 einen größeren Durchmesser als die Eindrückrolle 18 aufweisen muß.

Die beweglich gelagerte Andrückrolle 11 wird durch einen Druckluftzylinder 13 gegen den hindurchgeführten Dichtungsstreifen 2 und damit gegen die Förderrolle 10 gepreßt, um den Dichtungsstreifen 2 von der Abwickeltrommel 9 abzuziehen. Das Abwickeln wird dann unterbrochen, wenn der Druckluftzylinder 13 einfährt und die beweglich gelagerte Andrückrolle 11 sich von der fest gelagerten Förderrolle 10 abhebt, so daß der dazwischen befindliche Dichtungsstreifen 2 nicht mehr eingeklemmt ist und dementsprechend nicht mehr gefördert wird.

Durch die Anordnung einer ortsfesten Förderrolle 10 und einer mittels des Pneumatikzylinders 13 gegen die Förderrolle 10 anpreßbaren Andrückrolle 11 läßt sich auf der Förderstrecke für den Dichtungsstreifen Schlaufe 14 erzeugen, wodurch eine zug-bzw. dehnungsfreie Zuführung des Dichtungsstreifens 2 erreicht ist. Um die Schlaufe 14 während des Betriebes der Vorrichtung aufrechtzuerhalten, ist ein von dem Dichtungsstreifen 2 betätigbarer Schaltkontakt 15 vorgesehen, welcher ausgelöst wird, bevor der Dichtungsstreifen 2 unter Zug gerät. Durch Auslösen des Schaltkontaktes 15 wird die Andrückrolle 11 vermittels des Druckluftzylinders 13 gegen die Förderrolle 10 gepreßt, so daß der Dichtungsstreifen 2 von der Abwickeltrommel 9 abgezogen und die Schlaufe 14 erneut gebildet bzw. aufrechterhalten werden kann.

Das erste Einführen des vorderen Endes des von der Abwickeltrommel 9 abzuziehenden Dichtungsstreifen 2 geschieht mit Hilfe einer Einstechspitze, die am vorderen Ende einer Kolbenstange 16 eines Druckluftzylinders 17 angeordnet ist. Durch Ausfahren der Kolbenstange 16 aus dem Druckluftzylinder 17 wird der Dichtungsstreifen 2 bis zu einer in Förderrichtung der Förderrolle 10 nachgeordneten, angetriebenen Eindrückrolle 18 vorbewegt wird, welche das vordere Ende des Dichtungsstreifens 2 in die Nut 3 des Profilrahmens 1 eindrückt.

Sofern ein auf den Rollenbahntisch 6 aufgelegter Profilrahmen 1 mit einem der Schenkel gegen den Anschlag 7 gedruckt wird, wird eine in Förderrichtung verlaufende Förderrollen-Schiene 22 mit den Förderrollen 25 von oben auf diesen Schenkel des Profilrahmens 1 abgesenkt und klemmt den Schenkel 1 ein, so daß der Schenkel 1 durch die Förderrollen 25 erfaßt und in Förderrichtung verfahren werden kann. Das Absenken der Förderrollen-Schiene 22 wird bspw. mittels Druckluftzylinder durchgeführt. Untereinander können die Transportrollen 25 bspw. durch eine Rollenkette, Zahnriemen o. dgl. verbunden sein.

Für den Antrieb der Transportrollen 25, der Förderrolle 10 und der Eindrückrolle 18 ist ein gemeinsamer Antrieb 19, bspw. ein Getriebemotor, vorgesehen. Bei dem hier gewählten Ausführungsbeispiel wird eine der Förderrollen 25 von dem Antriebsmotor 19 über einen Kardangelenk 24 angetrieben. Die von der einen Transportrolle 25 aufgenommene Drehbewegung wird über nicht gesondert dargestellte Übertragungselemente, wie bspw. Zahnriemen o. dgl., auf die Eindrückrolle 18 und die Förderrolle 10 übertragen.

Um pro Zeiteinheit eine größere Länge des Dichtungsstreifens 2 im Vergleich zum Verfahrweg des Profilrahmens 1 zu fördern und in die Nut 3 des Profilrahmens 1 einzuziehen, weist die Eindrückrolle 18 eine höhere Umfangsgeschwindigkeit als die Transportrollen 25 auf. Dies wird vorzugsweise dadurch erzeugt, daß der Radius der Eindrückrolle 18 etwas größer bemessen ist als der Radius der Transportrollen 25, so daß bei gleicher Umdrehungszahl eine höhere Umfangsgeschwindigkeit der Eindrückrolle 18 gegenüber der Transportrolle 25 gegeben ist. Hierdurch erfährt der Dichtungsstreifen 2 während des Einziehens in die Nut 3 eine Art Stauchung bzw. Kompression . Dieser dynamische Staucheffekt unterstützt ein einwandfreies Einziehen des Dichtungsstreifens 2 in die Nut 3 unter der Einwirkung einer gewissen Andrückkraft. Vor allem ist aufgrund dieser Stauchung bzw. Kompression dafür gesorgt, daß der Dichtungsstreifen 2 sich nach Einziehen in die Nut 3 nicht weiter, insbesondere an den Enden zusammenzieht, so daß die Nut 3 über die gesamte Nutlänge dauerhaft mit dem Dichtungsstreifen 2 ausgefüllt ist.

Natürlich besteht auch die Möglichkeit, die Eindrückrolle 18 und die Transportrollen 25 mit gleichem Radius zu versehen, wobei dann die Eindrückrolle mit einer geringfügig größeren Drehzahl als die Transportrollen 25 zu betreiben ist. Eine andere Möglichkeit besteht darin, verstellbare Rollendurchmesser zu benutzen, wie bspw. mittels Reibrollen. Wesentlich ist, daß der Antrieb von Eindrückrolle 18 und Transportrollen 25 synchronisiert erfolgt, wobei die Eindrückrolle 18 mit einer größeren Umfangsgeschwindigkeit als die Transportrollen 25 betrieben wird.

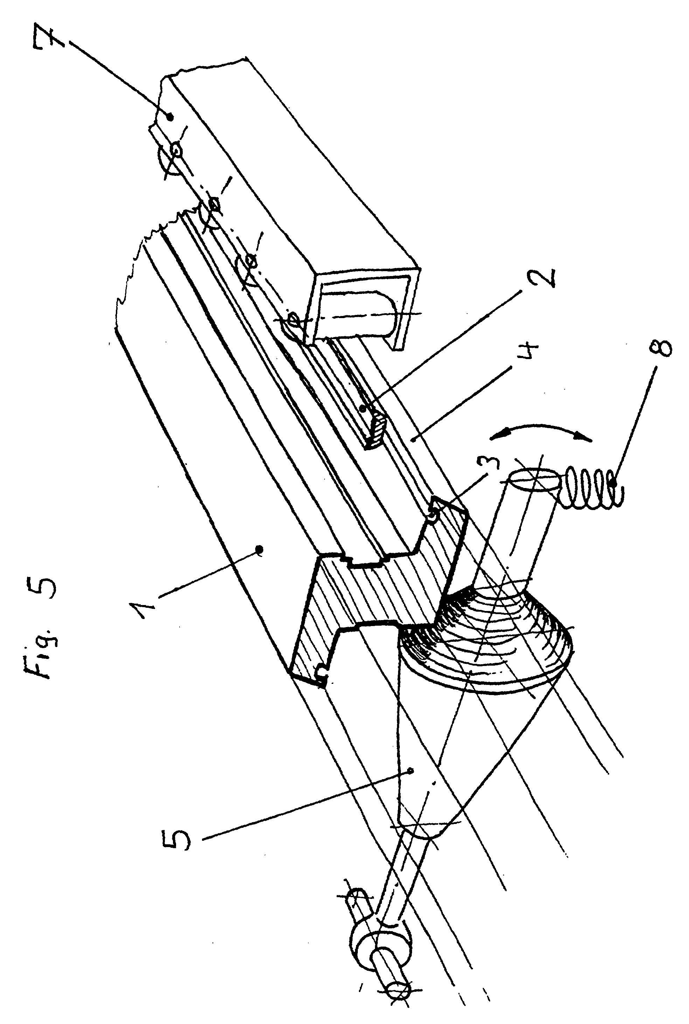

Wenn bei dem Auflegen eines Profilrahmens 1 auf den Rollenbahntisch 6 der eine Schenkel des Profilrahmens 1 gegen den Längsanschlag 7 geschoben wird, werden im Rollenbahntisch 6 angeordnete Führungsrollen 5 durch das Eigengewicht des Rahmens gegen die Kraft von Federn 8 nach unten gedrückt (vgl. Figur 5). Schlägt der Schenkel des Profilrahmens 1 an dem Längsanschlag 7 an, springen die Führungsrollen 5 unter der Kraft der Federn 8 wieder nach oben und legen sich gegen die Teilseitenfläche 4 des Profilrahmens 1, um diesen gegen den Längsanschlag 7 zu pressen. Durch diese Maßnahme ist der Geradeauslauf des Profilrahmens 1 auf dem Rollenbahntisch 6 gesichert. In Figur 5 ist eine perspektivische Ansicht einer solchen Führungsrolle 5 dargestellt. Die Führungsrolle 5 ist in Art eines Doppelkegelstumpfes ausgebildet, wobei der dem Anschlag 7 zugewandte Kegelstumpf einen sehr viel größeren Neigungswinkel seiner Mantelfläche aufweist bzw. eine relativ kurze Kegelachse besitzt.

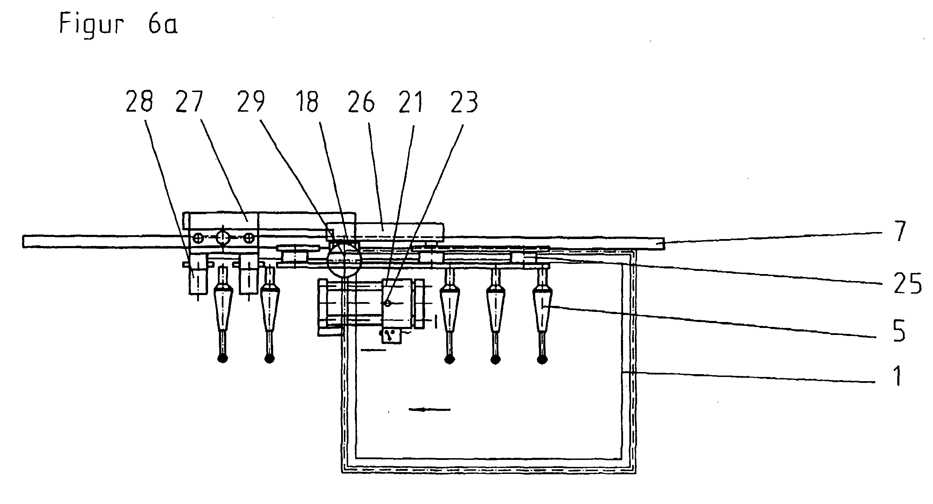

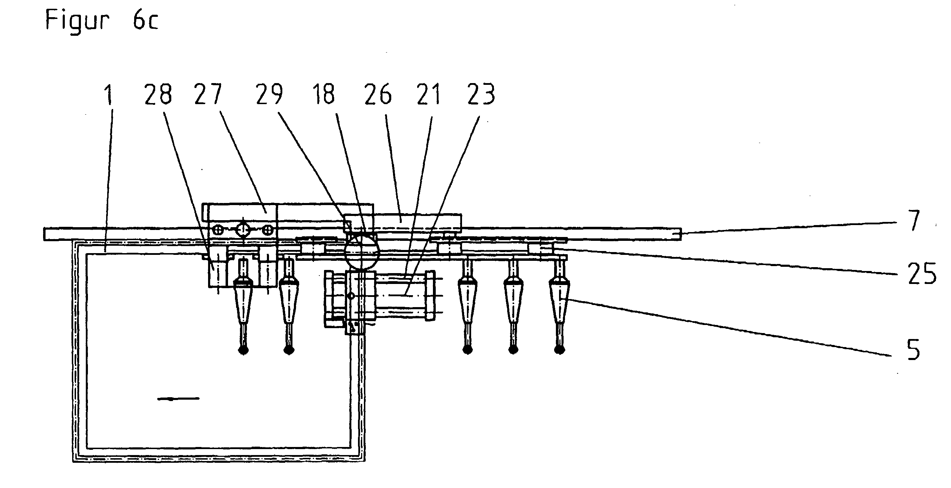

Weiterhin ist auf einem im Rollenbahntisch 6 fest eingebauten, waagrecht angeordneten Führungsschienenpaar 20 ein Schlitten 31 mit einem Mitnahmestift 23 waagrecht verschiebbar gelagert. Der Mitnahmestift 23 wird durch einen (nicht dargestellten) Druckluftzylinder nach oben ausgefahren, sobald der in Förderrichtung vordere, quer verlaufende Schenkel des Profilrahmens 1 über den Mitnahmestift 23 in seiner unteren, eingefahrenen Lage hinweggefahren ist (vgl. Figur 6a). Der Mitnahmestift 23 fährt dann nach oben aus, wenn er sich innerhalb des durch die Schenkel des Profilrahmens 1 gebildeten Freiraums befindet. Der ausgefahrene Mitnahmestift 23 dient am Ende der Geradeausförderbewegung des Profilrahmens 1 als Anschlag und Auslöseschalter für die Stillsetzung des Antriebes 12 und einer Schwenkbewegung des Profilrahmens 1 um 90°, so daß der Dichtungsstreifen 2 in die Nut 3 des nächsten Schenkels eingezogen werden kann.

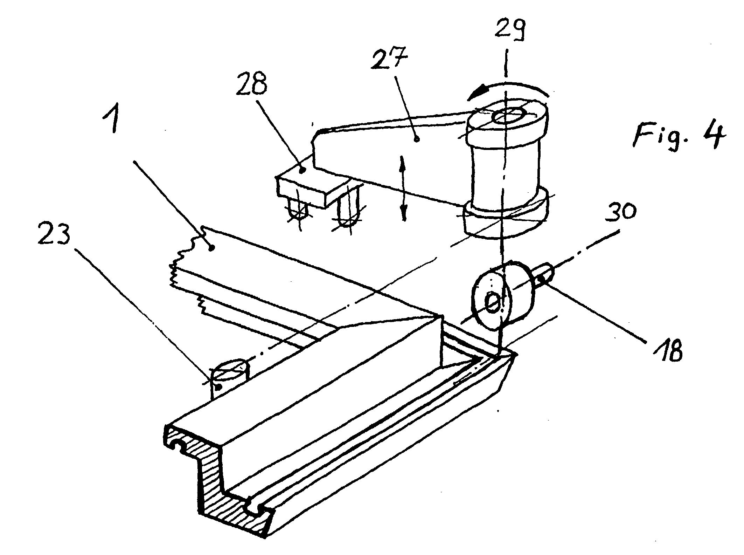

Zum Verschwenken des Rahmens 1 ist eine insgesamt mit Bezugszeichen 26 angezogene Schwenkeinrichtung vorgesehen. Wie insbesondere aus Figur 4 zu entnehmen, weist die Schwenkeinrichtung einen Arm 27 auf, an dessen freiem Ende eine Halteeinrichtung 28 zum Ergreifen und Spannen des Profilrahmens 1 angeordnet ist. Die Schwenkachse 29 schneidet die Achse 30 der Eindrückrolle 18 im Bereich deren Wirkfläche der Eindrückrolle 18 im rechten Winkel. Als Wirkfläche soll dabei diejenige Umfangsfläche der Eindrückrolle 18 verstanden werden, welche den Dichtungsstreifen 2 in die Nut 3 des Rahmens 1 drückt. Hierdurch ist ein kontinuierliches umlaufendes Einziehen des Dichtungsstreifens 2 in die Nut 3 des Profilrahmens 1 auch im Eckbereich ermöglicht, ohne daß die Gefahr einer Dehnung des Dichtstreifens 2 besteht.

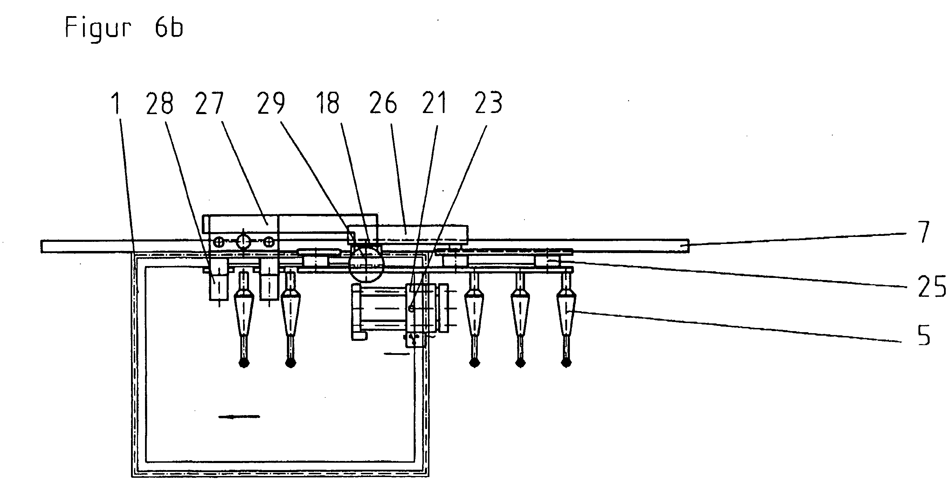

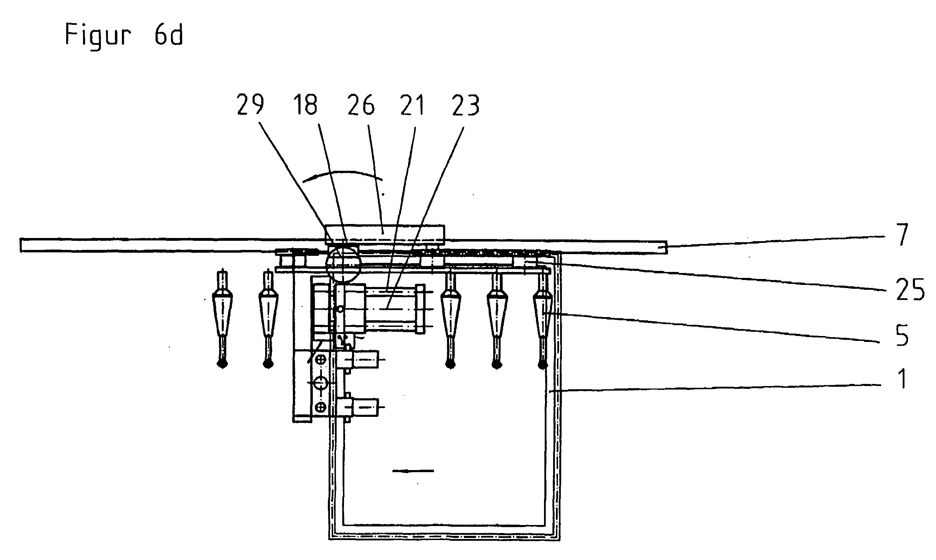

In Figuren 6a bis 6d sind die aufeinanderfolgenden Funktionsschritte beim Einziehen des Dichtungsstreifens 2 dargestellt. Sobald der Rahmen 1 einen (nicht dargestellten) Startschalter überfahren hat, wird der Antriebsmotor 19 eingeschaltet, der die Transportrollen 25 sowie den Profilrahmen 1 in Verfahrrichtung in Bewegung setzt. Ein zweiter Sensor registriert als Lichtschalter die Vorbeifahrt des vorderen, quer verlaufenden Schenkels des Profilrahmens 1 und aktiviert den Mitnahmestift 23, so daß dieser in den Freiraum des Profilrahmens 1 hochfährt. Bei Einschalten des Antriebes 19 wird auch die Eindrückrolle 18 in Drehung versetzt, so daß der Dichtungsstreifen 2 in der oben beschriebenen Weise in die Nut 3 des Profilrahmens 1 eingezogen wird. Während des Transportes des Rahmens 1 gelangt der Mitnahmestift 23 an die Innenseite des in Förderrichtung hinteren, quer verlaufenden Schenkels des Profilrahmens 1, wie dies in Figur 6b dargestellt ist. Der Mitnahmestift 23 wird dann zusammen mit dem Schlitten 21 auf dem Führungsschienenpaar 20 bis zu einem Anschlag mitgeschleppt. Ein weiterer, ebenfalls nicht dargestellter Sensor detektiert diesen Anschlag des Schlittens 21 des Mitnahmestiftes 23 und schaltet den Antrieb 19 für die Transportrollen 25 und die Eindrückrolle 18 ab, hebt die Förderrollenschiene 22 hoch und schwenkt die den Schenkel des Profilrahmens 1 seitlich andrückenden Führungsrollen 5 nach unten ab. Gleichzeitig wird die Schwenkbewegung des Rahmens 1 eingeleitet. Während dieser Schwenkbewegung wird der Dichtungsstreifen 2 in die entsprechende Ecke des Rahmens 1 eingezogen. Nach Beendigung der Schwenkbewegung wird die Spanneinrichtung 28 am Arm 27 der Schwenkeinrichtung 26 gelöst und die Schwenkeinrichtung 26 fährt sodann aus dem Profilrahmen 1 heraus. Die Förderrollen 25 sowie die Eindrückrolle 18 werden wieder in Drehung versetzt, wodurch das Dichtungsprofil 2 in die Nut 3 des nächsten Rahmenschenkels eingezogen wird, wie dies beispielhaft in Figur 6d dargestellt ist. Diese Arbeitsabläufe wiederholen sich, bis alle vier Rahmenschenkel des Rahmens abgearbeitet bzw. mit einem Dichtungsstreifen 2 versehen ist.

Sobald ein weiterer (nicht dargestellter) Sensor das vordere Ende der bereits eingezogenen Dichtung 2 erkennt, wird die Schneidvorrichtung 31 betätigt, wodurch der Dichtungsstreifen 2 mittels eines Messers 32 durchtrennt wird. Es versteht sich dabei, daß der Abstand zwischen Messer 32 und der Eindrückrolle 18 zur Lage des die Schneideinrichtung 31 betätigenden Sensors so abgestimmt ist, daß nach beendetem Einziehvorgang die Dichtungsenden i. w. spaltfrei aneinander zu liegen kommen.

### Bezugszeichenliste

- 1 -: Profilrahmen
- 2 -: Dichtungsstreifen
- 3 -: Nut
- 4 -: Teilseitenfläche
- 5 -: Führungsrolle
- 6 -: Rollenbahntisch
- 7 -: Anschlag
- 8 -: Feder
- 9 -: Abwickeltrommel
- 10 -: Förderrolle
- 11 -: Andrückrolle
- 12 -: Rollenbahn
- 13 -: Druckluftzylinder
- 14 -: Schlaufe
- 15 -: Schaltkontakt
- 16 -: Kolbenstange
- 17 -: Druckluftzylinder
- 18 -: Eindrückrolle
- 19 -: Antrieb
- 20 -: Führungsschienenpaar
- 21 -: Schlitten
- 22 -: Schiene
- 23 -: Mitnahmestift
- 24 -: Kardangelenk
- 25 -: Transportrolle
- 26 -: Schwenkeinrichtung
- 27 -: Schwenkmittel, Arm
- 28 -: Haltemittel, Spanneinrichtung
- 29 -: Schwenkachse
- 30 -: Achse
- 31 -: Schneideinrichtung
- 32 -: Messer

## Patentansprüche

1. Vorrichtung zum Einziehen eines Dichtungsstreifens (2) oder dergleichen länglich elastischen Elementes in eine Aufnahme an einem Werkstück, insbesondere in eine Nut (3) eines Profilschenkels (1) eines Fenster- oder Türrahmens, mit Mitteln zur Erzeugung einer Relativbewegung zwischen Werkstück und einer Einrichtung zum Zuführen und Einziehen des Dichtungsstreifens (2) in die Nut (3) mit einer Eindrückrolle (18), wobei zur Erzeugung eines Staucheffektes auf den Dichtungsstreifen (2) während des Einbringens in die Nut (3) die pro Zeiteinheit zugeführte Länge des Dichtungsstreifens (2) die Strecke der Relativbewegung zwischen Werkstück und der Einzieheinrichtung übersteigt, **dadurch gekennzeichnet, daß** in Fördereinrichtung vor der Eindrückrolle (18) eine Förderrolle (10) für den Dichtungsstreifen (2) vorgesehen ist, welcher Mittel zugeordnet sind, die eine Schlaufe (14) des Dichtungsstreifens (2) vor der Eindrückrolle (18) aufrechterhalten.

2. Vorrichtung nach Anspruch 1, **dadurch gekennzeichnet, daß** für die Förderrolle (10) und die Eindrückrolle (18) ein gemeinsamer Antrieb (19) vorgesehen ist, wobei die Förderrolle (10) einen größeren Durchmesser als die Eindrückrolle (18) aufweist.

3. Vorrichtung nach Anspruch 1 oder 2, **dadurch gekennzeichnet, daß** die Mittel zur Erzeugung der Relativbewegung eine Fördereinrichtung zum Fördern des Werkstückes gegenüber der, vorzugsweise stationär angeordneten, Einzieheinrichtung aufweist.

4. Vorrichtung nach Anspruch 3, **dadurch gekennzeichnet, daß** die Fördereinrichtung wenigstens eine angetriebene Transportrolle (25) oder dergleichen Transportelement zum Verfahren des Werkstückes und die Einzieheinrichtung wenigstens eine angetriebene Eindrückrolle (18), -walze oder dergleichen Förderelement zum Fördern, Zuführen und Einziehen des Dichtungsstreifens (2) aufweisen, deren Drehzahlen synchronisiert sind, wobei die Umfangsgeschwindigkeit der Eindrückrolle (18) größer als die Umfangsgeschwindigkeit der Transportrolle (25) ist.

5. Vorrichtung nach einem der vorhergehenden Ansprüche, **dadurch gekennzeichnet, daß** die Fördereinrichtung und die Einzieheinrichtung einen gemeinsamen Antrieb (19) aufweisen.

6. Vorrichtung nach einem der vorhergehenden Ansprüche, **dadurch gekennzeichnet, daß** der Radius der Eindrückrolle (18) größer als der Radius der Transportrolle (25) ist.

7. Vorrichtung nach einem der Ansprüche 4 bis 6, **dadurch gekennzeichnet, daß** die Transportrolle (25) und die Eindrückrolle (18) im Durchmesser verstellbar sind.

8. Vorrichtung nach einem der vorhergehenden Ansprüche, **dadurch gekennzeichnet, daß** die Einzieheinrichtung für eine zug- bzw. dehnungsfreie Förderung und Einziehbewegung des Dichtungsstreifens (2) ausgebildet ist.

9. Vorrichtung nach einem der vorhergehenden Ansprüche, **dadurch gekennzeichnet, daß** die Einzieheinrichtung, insbesondere deren Eindrückrolle (18), verstellbar bzgl. der Auflage des Werkstückes ausgebildet ist.

10. Vorrichtung nach einem der vorhergehenden Ansprüche, **dadurch gekennzeichnet, daß** eine Schwenkeinrichtung (26) für das Werkstück vorgesehen ist mit Haltemitteln (28) für das Werkstück sowie Schwenkmitteln (27) zum Verschwenken der Haltemittel (28).

11. Vorrichtung nach Anspruch 10, **dadurch gekennzeichnet, daß** die Schwenkachse (29) der Schwenkeinrichtung (26) die Achse (30) der Eindrückrolle (18) etwa im Bereich deren Wirkfläche in einem rechten Winkel schneidet.

12. Vorrichtung nach einem der vorhergehenden Ansprüche, **dadurch gekennzeichnet, daß** die Schwenkeinrichtung (26) einen zum Eingreifen in den Fenster- oder Türrahmen ausgebildeten und zumindest zeitweise während der Förderbewegung des Rahmens in Mitnahmebewegung mit der Fördereinrichtung bzw. dem Werkstück stehenden Mitnahmestift (23) aufweist, welcher in einer Endstellung ein Signal für die Einleitung der Schwenkbewegung und/oder Stillsetzung der Förderbewegung des Werkstückes bzw. des Antriebes (19) auslöst.

13. Vorrichtung nach einem der vorhergehenden Ansprüche, **dadurch gekennzeichnet, daß** die Fördereinrichtung Führungsrollen (25) aufweist, welche das Werkstück während der Einziehbewegung des Dichtungsstreifens (2) gegen einen Anschlag (7) drücken, die ggf. in einer Richtung senkrecht zur Aufnahmeebene für das Werkstück beweglich sind und in Art eines Doppelkegelstumpfes ausgebildet sind, wobei der dem Werkstück zugewandte Kegelstumpf einen relativ großen Neigungswinkel seiner Mantelfläche aufweist.

## Claims

1. Device for drawing a sealing strip (2) or like elongate elastic element into a receptacle at a workpiece, particularly into a groove (3) of a profile limb (1) of a window frame or door frame, with means for producing a relative movement between workpiece and a device for feeding and drawing the sealing strip (2) into the groove (3) by a pressing roller (18), wherein for producing a compressive effect on the sealing strip (2) during the introduction into the groove (3) the length, which is fed per unit time, of the sealing strip (2) exceeds the path length of relative movement between workpiece and the drawing-in device, **characterised in that** provided in conveying direction ahead of the pressing roller (18) is a conveying roller (10) for the sealing strip (2), the roller being associated with means which maintain a loop (14) of the sealing strip (2) in front of the pressing roller (18).

2. Device according to claim 1, **characterised in that** a common drive (19) is provided for the conveying roller (10) and the pressing roller (18), wherein the conveying roller (10) has a larger diameter than the pressing roller (18).

3. Device according to claim 1 or 2, **characterised in that** the means for producing the relative movement comprise a conveying device for conveying the workpiece relative to the drawing-in device, which is preferably arranged to be stationary.

4. Device according to claim 3, **characterised in that** the conveying device comprises at least one driven transport roller (25) or like transport element for moving the workpiece and the drawing-in device comprises at least one driven pressing-in roller (18), pressing-in roll or like conveying element for conveying, feeding and drawing-in of the sealing strip (2), the rotational speeds of which are synchronised, wherein the circumferential speed of the pressing-in roller (18) is greater than the circumferential speed of the transport roller (25).

5. Device according to one of the preceding claims, **characterised in that** the conveying device and the drawing-in device have a common drive (19).

6. Device according to one of the preceding claims, **characterised in that** the radius of the pressing-in roller (18) is larger than the radius of the transport roller (25).

7. Device according to one of claims 4 to 6, **characterised in that** the transport roller (25) and the pressing-in roller (18) are adjustable in diameter.

8. Device according to one of the preceding claims, **characterised in that** the drawing-in device is constructed for a tension-free or stretch-free conveying and drawing-in movement of the sealing strip (2).

9. Device according to one of the preceding claims, **characterised in that** the drawing-in device, particularly the pressing-in roller thereof (18), is constructed to be adjustable with respect to the support of the workpiece.

10. Device according to one of the preceding claims, **characterised in that** a pivot device (26) for the workpiece is provided, with retaining means (28) for the workpiece as well as pivot means (27) for pivoting the retaining means (28).

11. Device according to claim 10, **characterised in that** the pivot axis (29) of the pivot means (26) intersects the axis (30) of the pressing-in roller (18) approximately in the region of the effective surface of the pressing-in roller at a right angle.

12. Device according to one of the preceding claims, **characterised in that** the pivot device (26) comprises an entraining pin (23), which is constructed for engagement in the window frame or door frame, stands in entraining movement with the conveying device or the workpiece at least during the time of conveying movement of the workpiece and in an end setting triggers a signal for the initiation of the pivot movement and/or cessation of the conveying movement of the workpiece or the drive (19).

13. Device according to one of the preceding claims, **characterised in that** the conveying device comprises guide rollers (25) which during the drawing-in movement of the sealing strip (2) press the workpiece against an abutment (7), which guide rollers are movable in a given case in a direction perpendicular to the plane of reception for the workpiece and are constructed in the manner of a double cone frustum, wherein the cone frustum facing the workpiece has a relatively large angle of inclination of its circumferential surface.

## Revendications

1. Dispositif d'insertion d'une bande de joint d'étanchéité (2) ou d'un autre élément élastique longiligne similaire dans un emplacement récepteur ménagé dans une pièce à travailler, en particulier dans une rainure (3) d'un montant profilé (1) d'un châssis de fenêtre ou de porte, comprenant des moyens de création d'un mouvement relatif entre la pièce à travailler et un dispositif d'acheminement et d'insertion de la bande de joint d'étanchéité (2) dans la rainure (3) au moyen d'un rouleau presseur (18), la longueur de bande de joint d'étanchéité (2) acheminée par unité de temps dépassant la distance du déplacement relatif entre la pièce à travailler et le dispositif d'insertion, de manière à exercer un effet de compression sur la bande de joint d'étanchéité (2) pendant son introduction dans la rainure (3),
**caractérisé en ce qu'**un rouleau débiteur (10) de la bande de joint d'étanchéité (2) est prévu dans le dispositif d'acheminement et devant le rouleau presseur (18), vu dans le sens de l'acheminement, rouleau auquel sont associés des moyens qui maintiennent une boucle (14) de la bande de joint d'étanchéité (2) en amont du rouleau presseur (18).

2. Dispositif selon la revendication 1, **caractérisé en ce qu'**un entraînement commun (19) est prévu pour le rouleau débiteur (10) et le rouleau presseur (18), le rouleau débiteur (10) ayant un diamètre supérieur à celui du rouleau presseur (18).

3. Dispositif selon la revendication 1 ou 2, **caractérisé en ce que** les moyens de création d'un mouvement relatif comportent un dispositif transporteur destiné à déplacer la pièce à travailler par rapport au dispositif d'insertion de préférence disposé de façon stationnaire.

4. Dispositif selon la revendication 3, **caractérisé en ce que** le dispositif transporteur comporte au moins un rouleau transporteur entraîné (25) ou un autre élément de transport similaire permettant de déplacer la pièce à travailler, et **en ce que** le dispositif d'insertion comporte au moins un rouleau ou cylindre presseur entraîné (18) ou autre élément similaire permettant de débiter, d'acheminer et d'insérer la bande de joint d'étanchéité (2), éléments dont les vitesses de rotation sont synchronisées, la vitesse périphérique du rouleau presseur (18) étant plus grande que la vitesse périphérique du rouleau transporteur (25).

5. Dispositif selon l'une des revendications précédentes, **caractérisé en ce que** le dispositif d'acheminement et le dispositif d'insertion comprennent un entraînement commun (19).

6. Dispositif selon l'une des revendications précédentes, **caractérisé en ce que** le rayon du rouleau presseur (18) est supérieur au rayon du rouleau transporteur (25).

7. Dispositif selon l'une des revendications 4 à 6, **caractérisé en ce que** le diamètre des rouleaux de transport (25) et presseur (18) est réglable.

8. Dispositif selon l'une des revendications précédentes, **caractérisé en ce que** le dispositif d'insertion est configuré pour assurer un acheminement et un mouvement d'insertion sans tension ni allongement de la bande de joint d'étanchéité (2).

9. Dispositif selon l'une des revendications précédentes, **caractérisé en ce que** le dispositif d'insertion, en particulier le rouleau presseur (18) de celui-ci, est configuré de façon réglable par rapport à la surface d'appui de la pièce à travailler.

10. Dispositif selon l'une des revendications précédentes, **caractérisé en ce qu'**un dispositif de retournement (26) de la pièce à travailler est prévu, comportant des moyens de prise (28) de 1a pièce à travailler, ainsi que de moyens de rotation (27) permettant de faire pivoter les moyens de prise (28).

11. Dispositif selon la revendication 10, **caractérisé en ce que** l'axe de pivotement (29) du dispositif de retournement (26) coupe l'axe (30) du rouleau presseur (18) à un angle droit, à peu près au niveau de la surface d'action de ce rouleau.

12. Dispositif selon l'une des revendications précédentes, **caractérisé en ce que** le dispositif de retournement (26) comporte un doigt d'entraînement (23) conçu pour entrer en contact avec le châssis de fenêtre ou de porte et se trouvant au moins temporairement, pendant le mouvement d'avance du châssis, en prise d'entraînement avec le dispositif transporteur ou la pièce à travailler, déclenchant, lorsqu'il se trouve dans sa position de fin de course, un signal de démarrage du mouvement de retournement et/ou d'arrêt du mouvement de transport de la pièce à travailler ou d'arrêt de l'entraînement (19).

13. Dispositif selon l'une des revendications précédentes, **caractérisé en ce que** le dispositif transporteur comporte des rouleaux de guidage (25) qui serrent la pièce à travailler contre une butée (7), pendant le mouvement d'insertion de la bande de joint d'étanchéité (2), ces rouleaux pouvant être mobiles dans un sens perpendiculaire au plan d'appui de la pièce à travailler et étant configurés à la manière d'un double cône tronqué, le cône tronqué tourné face à la pièce à travailler ayant une surface enveloppante qui présente un angle d'inclinaison relativement important.
